# FASCICULE DE BREVET EUROPEEN

(11) **EP 4 028 280 B1**
(45) Date de publication et mention de la délivrance du brevet: **27.11.2024**
(21) Numéro de dépôt: 20788847.0
(22) Date de dépôt: 26.08.2020
(51) Int. Cl.: B60L 53/12, B60L 53/38

(54) **DISPOSITIF DE RECHARGE DE BATTERIES DE VÉHICULES ÉLECTRIQUES PAR INDUCTION**
INDUKTIVES LADEGERÄT FÜR DAS LADEN VON ELEKTRISCHEN FAHRZEUGEN
INDUCTIVE CHARGING DEVICE FOR ELECTRIC VEHICLE CHARGING

(30) Priorité: 11.09.2019 FR 1910027
(43) Date de publication de la demande: 20.07.2022
(73) Titulaire: Upandcharge, 92130 Issy-les-Moulineaux (FR)
(72) Inventeur: FLAQUIERE, Guy, 92130 ISSY LES MOULINEAUX (FR)
(74) Mandataire: Reinhardt, Yves
(86) Numéro de dépôt international: PCT/FR2020/000228
(87) Numéro de publication internationale: WO 2021/048472

(56) Documents cités:
- EP-A1- 1 061 631
- WO-A1-2018/076016
- WO-A2-2011/151696

## Description

La présente invention concerne un dispositif pour faciliter le rechargement des véhicules électriques par induction contrairement aux dispositifs actuels utilisant un câble et une prise de raccordement

Les solutions de recharge à induction proposées pour les véhicules électriques sont basées sur des systèmes ayant une distance importante entre l'émetteur et le récepteur, soit une vingtaine de centimètres, ce qui implique d'utiliser des techniques hautes fréquences onéreuses et prioritaires à chaque marque de véhicules. Par ailleurs on constate également que les gardes au sol étant différentes en fonction des modèles au sein d'une même marque et que le problème de couplage électromagnétique étant directement proportionnel au carré de la distance et au centrage entre l'émetteur et le récepteur, tout ceci rend ces solutions de recharges onéreuses et difficilement utilisable de façon universelle.

WO 2011/151696 A2 divulgue un dispositif placé dans un parking ayant plusieurs emplacements pour recharger par induction les véhicules électriques s'y trouvant grâce à une borne rétractable qui est déplaçable vers les différents emplacements du parking. Une partie de commande incluse dans une installation fixe sur le bord du parking gère la routine de recharge des véhicules. Elle gère en particulier l'ordre dans lesquels les véhicules doivent être chargés et le déplacement de la borne rétractable vers les différents emplacements du parking, ainsi que son alignement avec le récepteur du véhicule électrique s'y trouvant, puis provoque la montée de la borne rétractable vers le récepteur du véhicule et sa descente, ainsi que la recharge proprement dite. Cette partie de commande envoie aussi des informations aux propriétaires des véhicules en les envoyant à des dispositifs d'affichage installés dans leur résidence. Quant au véhicule électrique, il est équipé d'un microcontrôleur pour transmettre un identifiant du véhicule et l'état de charge de ses batteries au dispositif de charge placé dans le parking via un dispositif de communication sans fil.

WO 2018/076016 A1 décrit dans le contexte de la recharge des véhicules électriques une application mobile pouvant être intégrée à un véhicule électrique et fournissant une assistance au conducteur pour aligner le récepteur du véhicule par rapport à un émetteur d'une borne de recharge par induction qui est agencée de manière fixe dans le sol ou ailleurs sans possibilité de se déployer et se rétracter. A cette fin, l'application mobile affiche des informations d'alignement du véhicule électrique avec la borne de recharge. Elle permet aussi à l'utilisateur de lancer la recharge et d'afficher des informations relatives à la recharge telle que la progression de la charge, le temps de recharge et le coût de la recharge. Elle permet aussi de géolocaliser les bornes de recharge existant dans une région géographique.

L'invention quant à elle propose une application mobile ou intégrée dans un véhicule électrique, qui est prévue pour gérer une borne rétractable d'un dispositif pour recharger les batteries des véhicules électriques par induction, cette application étant définie dans la revendication 1. L'invention propose aussi conformément à la revendication 7 un dispositif pour recharger les batteries de véhicules électriques par induction, comprenant une borne rétractable prévue pour être placée dans une chaussée et qui est prévue pour être gérée par l'intermédiaire d'une telle application mobile ou intégrée dans le véhicule. Le dispositif peut être appliqué à la recharge des batteries de véhicules électriques de tous types, tous modèles, toutes marques. L'invention propose enfin conformément à la revendication 9 un système comprenant à la fois un tel dispositif pour recharger les batteries de véhicules électriques par induction et une telle application mobile ou intégrée dans un véhicule électrique. Les revendications dépendantes définissent des modes de réalisation préférés.

Cette solution originale et innovante permettra de recharger facilement les batteries des véhicules électriques, automatiquement sans intervention manuelle du conducteur et dans un futur proche d'effectuer la recharge des batteries, des véhicules autonomes, sans intervention humaine.

La présente invention consiste à utiliser une borne rétractable comprenant l'émetteur, se trouvant dans la chaussée, se dépliant vers le plancher du véhicule électrique (comprenant le récepteur) à recharger, jusqu'à son contact.

Cette borne rétractable ainsi que le plancher du véhicule seront équipés de bobinages permettant la recharge des batteries par induction utilisant un procédé universel choisi par tous les constructeurs de véhicules. La borne rétractable sera équipée de l'électronique de contrôle (7) permettant de rapprocher l'émetteur jusqu'au récepteur (2) et des dispositifs de sécurité. Ceci permettra de transmettre l'énergie électrique aux batteries du véhicule par l'intermédiaire d'un boîtier électronique (5) et du câble d'alimentation (4). Les bobinages de l'émetteur sont intégrés au sommet de la borne rétractable.

Cette borne inclut également un dispositif mécanique permettant la montée et la descente de celle-ci, ainsi qu'un câble d'alimentation (9) délivrant de l'énergie depuis le réseau électrique.

Le mode de chargement pourra s'effectuer en courant continu ou alternatif par l'intermédiaire du boîtier électronique permettant de choisir la vitesse de rechargement des batteries.

Cette solution permet de garantir un rendement optimum de la recharge des batteries par induction.

Cette solution a l'avantage de proposer un système universel compatible avec toutes les gardes au sol des véhicules et ainsi de maximiser le rendement électrique à plus de 95%. La bobine réceptrice sera implantée au milieu du plancher du véhicule, permettant ainsi de faciliter le centrage du récepteur et de l'émetteur. Cet alignement sera contrôlable par l'intermédiaire d'une application qui sera intégrée dans les téléphones portables ou directement inclus dans l'interface des véhicules lorsque la borne est en position repos.

Cette application permettra de localiser les bornes disponibles, de permettre le centrage du véhicule pouvant se garer en marche avant ou en marche arrière sur une place de parking, ou sur la droite ou la gauche le long d'un trottoir (le récepteur étant déjà centré sur l'émetteur en transversale).

L'application permettra également de contrôler le niveau de charge et le temps de charge, de gérer le contrôle de la hauteur de la borne en fonction du véhicule jusqu'au contact et d'interdire le démarrage du véhicule si la borne n'est pas revenue à son point de départ soit au niveau zéro par rapport au sol.

L'application gérera également les données permettant la facturation de la recharge en fonction de la puissance demandée et de la durée de celle-ci, intègrera les informations bancaires de l'utilisateur et intégrera une carte indiquant les bornes disponibles à proximité du véhicule.

L'automatisation de cette borne sera sécurisée à plusieurs niveaux la borne ne pourra se déployer que si le centrage indique un couplage correct, la recharge ne pourra débuter que si la borne (partie émettrice ayant un bobinage intégré) se trouve en contact avec la partie réceptrice (bobinage intégré sous le planché du véhicule), et le véhicule ne pourra bouger que si la borne est complètement revenue à sa position initiale c'est-à-dire au niveau du sol.

Cette solution permettra d'implanter ces bornes de recharge facilement dans tous les lieux publiques ou privés ainsi que dans des lieux classés, car celle-ci seront invisibles et impossible à vandaliser car aucun élément ne sera apparent en surface au niveau de la chaussée.

Les dessins en annexes illustrent la simplicité de la solution et son efficacité évidente.

Automatisme intégral, invisible au repos, adaptable à tous types de véhicules électriques rechargeables : voitures, camions, autocars, véhicules autonomes, ainsi que les deux roues, scooters, motos, système autonomes (Robots de livraison) etc...

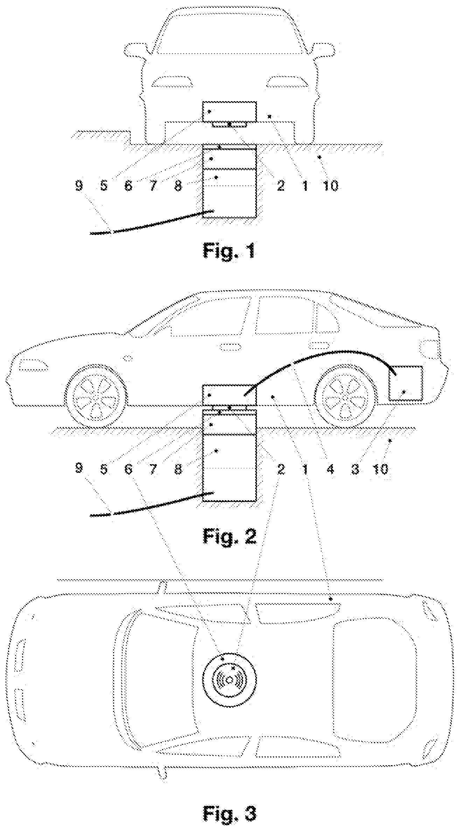

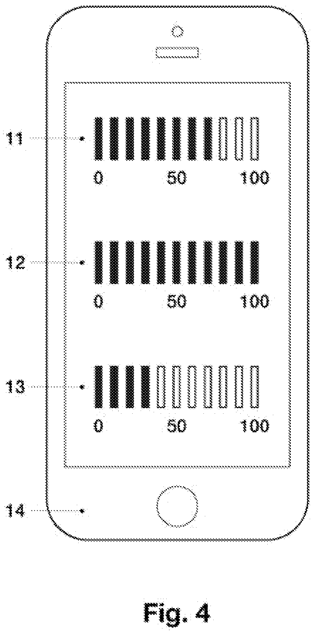

## Revendications

1. Application mobile (14) ou intégrée dans un véhicule électrique (1), prévue pour gérer une borne rétractable (8) d'un dispositif pour recharger les batteries des véhicules électriques par induction, la borne rétractable (8) se trouvant dans une chaussée et intégrant la partie émettrice incluant le ou les bobinages (6) et l'électronique de contrôle (7) permettant de rapprocher cet émetteur jusqu'au récepteur (2) intégré sous le plancher du véhicule (1), permettant de transmettre l'énergie électrique aux batteries du véhicule (3) par l'intermédiaire d'un boîtier électronique (5) et du câble d'alimentation (4), la borne rétractable (8) incluant également un dispositif mécanique permettant la montée et la descente de celle-ci, ainsi qu'un câble d'alimentation (9) délivrant l'énergie depuis le réseau électrique,
l'application étant prévue pour :
- contrôler la position du véhicule par rapport à la borne rétractable en position repos,
- indiquer la qualité du couplage (12), le niveau de charge (13) et le temps de charge (11),
- gérer le contrôle du déplacement en hauteur de la borne rétractable en fonction du véhicule jusqu'au contact avec la partie récepteur, et
- interdire le démarrage du véhicule si la borne rétractable n'est pas revenue à son point de départ soit au niveau zéro par rapport au sol.

2. Application selon la revendication 1, laquelle est prévue pour intégrer des informations bancaires de l'utilisateur, permettant la facturation de l'énergie consommée.

3. Application selon la revendication 1 ou 2, laquelle est prévue pour intégrer une carte indiquant les bornes disponibles à proximité du véhicule électrique.

4. Dispositif pour recharger les batteries de véhicules électriques par induction, comprenant une borne rétractable (8) prévue pour être placée dans une chaussée, dans lequel :
- la borne rétractable (8) intègre la partie émettrice incluant le ou les bobinages (6) et l'électronique de contrôle (7) permettant de rapprocher cet émetteur jusqu'au récepteur (2) intégré sous le plancher du véhicule (1), permettant de transmettre l'énergie électrique aux batteries du véhicule (3) par l'intermédiaire d'un boîtier électronique (5) et du câble d'alimentation (4),
- la borne rétractable (8) inclut également un dispositif mécanique permettant la montée et la descente de celle-ci, ainsi qu'un câble d'alimentation (9) délivrant l'énergie depuis le réseau électrique, et
- la borne rétractable (8) est prévue pour être gérée par l'intermédiaire d'une application mobile (14) ou intégrée dans le véhicule (1) selon l'une quelconque des revendications 1 à 3.

5. Dispositif selon la revendication 4, dans lequel la borne rétractable (8) est prévue pour venir en contact avec le récepteur (2) fixé ou intégré sous le véhicule (1) et centré par rapport à celui-ci..

6. Dispositif selon la revendication 4 ou 5, dans lequel les bobinages (6) sont intégrés au sommet de la borne rétractable (8).

7. Dispositif selon l'une quelconque des revendications 4 à 6, dans lequel la borne rétractable (8) intègre également des dispositifs de sécurité inclus dans le boîtier électronique (7).

8. Dispositif selon l'une des quelconques revendications 4 à 7, dans lequel l'application pour téléphone mobile ou intégré dans le véhicule est nécessaire et indispensable pour l'utilisation de la borne rétractable (8).

9. Système, comprenant :
- un dispositif pour recharger les batteries de véhicules électriques selon l'une quelconque des revendications 4 à 8, et
- une application mobile (14) ou intégrée dans un véhicule électrique (1) selon l'une quelconque des revendications 1 à 3, laquelle est prévue pour gérer la borne rétractable (8) du dispositif pour recharger les batteries de véhicules électriques.

## Patentansprüche

1. Mobile oder in ein Elektrofahrzeug (1) integrierte Applikation (14), vorgesehen zur Handhabung einer einziehbaren Säule (8) einer Vorrichtung zum Wiederaufladen der Batterien von Elektrofahrzeugen durch Induktion, wobei sich die einziehbare Säule (8) in einer Fahrbahn befindet und den Sendeteil einschließlich einer oder mehrerer Wicklung(en) (6) und die Steuerelektronik (7) beinhaltet, diesem Sender ermöglichend sich bis zum unter dem Boden des Fahrzeugs (1) integrierten Empfänger (2) anzunähern, es ermöglichend elektrische Energie über eine elektronische Box (5) und das Versorgungskabel (4) an die Batterien des Fahrzeugs (3) zu übertragen, wobei die einziehbare Säule (8) auch eine mechanische Vorrichtung umfasst, die ihr Anheben und Absenken ermöglicht, sowie ein Energie aus dem Stromnetz lieferndes Versorgungskabel (9),
wobei die Applikation vorgesehen ist, um:
- die Position des Fahrzeugs in Bezug auf die einziehbare Säule in Ruhestellung zu steuern,
- die Qualität der Kopplung (12), den Ladestand (13) und die Ladezeit (11) anzuzeigen,
- die Steuerung des Höhenversatzes der einziehbaren Säule in Abhängigkeit vom Fahrzeug bis zum Kontakt mit dem Empfängerteil handzuhaben und
- das Starten des Fahrzeugs zu verbieten, wenn die einziehbare Säule nicht zu ihrem Ausgangspunkt, d. h. zur Höhe Null über dem Boden, zurückgekehrt ist.

2. Applikation nach Anspruch 1, die zur Integration von Bankinformationen des Nutzers vorgesehen ist, die Abrechnung verbrauchter Energie ermöglichend.

3. Applikation nach Anspruch 1 oder 2, die dazu vorgesehen ist, eine Karte zu integrieren, die die verfügbaren Ladestationen in der Nähe des Elektrofahrzeugs anzeigt.

4. Vorrichtung zum Wiederaufladen der Batterien von Elektrofahrzeugen durch Induktion, mit einer einziehbaren Säule (8), vorgesehen zur Platzierung in einer Fahrbahn, wobei:
- die einziehbare Säule (8) den Sendeteil beinhaltet, der die Wicklung(en) (6) und die Steuerelektronik (7) einschließt, diesen Sender ermöglichend bis zum unter dem Boden des Fahrzeugs (1) integrierten Empfänger (2) anzunähern, es ermöglichend elektrischen Energie an die Batterien des Fahrzeugs (3) über eine elektronische Box (5) und das Versorgungskabel (9) zu übertragen,
- die einziehbare Säule (8) auch eine mechanische Vorrichtung enthält, die ihr Anheben und Absenken ermöglicht, sowie ein Energie aus dem Stromnetz lieferndes Versorgungskabel (9), und
- die einziehbare Säule (8) dafür vorgesehen ist, über eine mobile oder in das Fahrzeug (1) integrierte Applikation (14) nach einem der Ansprüche 1 bis 3 gehandhabt zu werden.

5. Vorrichtung nach Anspruch 4, bei welcher die einziehbare Säule (8) dazu vorgesehen ist, mit dem unter dem Fahrzeug (1) befestigten oder integrierten und diesbezüglich zentrierten Empfänger (2) in Kontakt zu kommen.

6. Vorrichtung nach Anspruch 4 oder 5, bei welcher die Wicklungen (6) an der Oberseite der einziehbaren Säule (8) integriert sind.

7. Vorrichtung nach einem der Ansprüche 4 bis 6, bei welcher die einziehbare Säule (8) auch in der Elektronikbox (7) enthaltene Sicherheitsvorrichtungen integriert.

8. Vorrichtung nach einem der Ansprüche 4 bis 7, bei welcher die Applikation für Mobiltelefon oder im Fahrzeug integrierte für die Nutzung der einziehbaren Säule (8) notwendig und unerlässlich ist.

9. System, umfassend:
- eine Vorrichtung zum Wiederaufladen von Batterien von Elektrofahrzeugen nach einem der Ansprüche 4 bis 8, und
- eine mobile oder in ein Elektrofahrzeug (1) integrierte Applikation (14) nach einem der Ansprüche 1 bis 3, die dazu vorgesehen ist, die einziehbare Säule (8) der Vorrichtung zum Wiederaufladen von Batterien von Elektrofahrzeugen handzuhaben.

## Claims

1. Mobile application (14) or application integrated into an electric vehicle (1), designed to manage a retractable post (8) of a device for recharging the batteries of electric vehicles by induction, the retractable post (8) being located in a roadway and integrating the transmitter part including the coil(s) (6) and the control electronics (7) allowing to bring this transmitter up to the receiver (2) integrated under the floor of the vehicle (1), allowing to transmit electrical energy to the vehicle batteries (3) via an electronic box (5) and the power supply cable (4), the retractable post (8) also including a mechanical device allowing the raising and the lowering of the latter, and a power supply cable (9) delivering the energy from the electrical network,
the application being designed to:
- control the position of the vehicle relative to the retractable post in the rest position,
- indicate the quality of the coupling (12), the level of charge (13) and the charging time (11),
- manage the control of the displacement in height of the retractable post in relation to the vehicle until the contact with the receiving part, and
- prohibit the starting of the vehicle if the retractable post has not returned to its starting point, i.e. to zero level with respect to the ground.

2. The application according to claim 1, which is designed to integrate banking information of the user, allowing the invoicing of the energy consumed.

3. The application according to claim 1 or 2, which is designed to integrate a map indicating the posts available in the vicinity of the electric vehicle.

4. A device for recharging the batteries of electric vehicles by induction, comprising a retractable post (8) intended to be placed in a roadway, wherein:
- the retractable post (8) incorporates the transmitter part including the coil(s) (6) and the control electronics (7) allowing to bring this transmitter up to the receiver (2) integrated under the floor of the vehicle (1), allowing to transmit electrical energy to the vehicle batteries (3) via an electronic box (5) and the power supply cable (4),
- the retractable post (8) also includes a mechanical device allowing the raising and the lowering of the latter, as well as a power supply cable (9) delivering the energy from the electrical network, and
- the retractable post (8) is designed to be managed via a mobile application (14) or an application integrated into the vehicle (1), which application is according to any one of claims 1 to 3.

5. The device according to claim 4, wherein the retractable post (8) is intended to come into contact with the receiver (2) fixed to or integrated under the vehicle (1) and centered with respect thereto.

6. The device according to claim 4 or 5, wherein the coils (6) are integrated at the top of the retractable post (8).

7. The device according to any one of claims 4 to 6, wherein the retractable post (8) also incorporates safety devices included in the electronic box (7).

8. The device according to any one of claims 4 to 7, wherein the application for mobile phone or integrated into the vehicle is necessary and indispensable for the use of the retractable post (8).

9. A system, comprising:
- a device for recharging the batteries of electric vehicles according to any one of claims 4 to 8, and
- a mobile application (14) or an application integrated in an electric vehicle (1), which application is according to any one of claims 1 to 3 and which is designed to manage the retractable post (8) of the device for recharging the batteries of electric vehicles.
